(19) Europäisches Patentamt

European Patent Office

Office européen des brevets

(11) **EP 1 026 910 B1**

(12) **EUROPEAN PATENT SPECIFICATION**

(45) Date of publication and mention
of the grant of the patent:
**29.11.2006 Bulletin 2006/48**

(51) Int Cl.:
***H04Q 7/32*** (2006.01)

(21) Application number: **99102399.5**

(22) Date of filing: **08.02.1999**

(54) **Mobile radio station**

Mobile Funkstation

Station radio mobile

(84) Designated Contracting States:
**DE FR IT**

(43) Date of publication of application:
**09.08.2000 Bulletin 2000/32**

(73) Proprietor: **NEC CORPORATION**
**Tokyo (JP)**

(72) Inventor: **Walton, Mark James**
**Reading,**
**Berkshire RG2 7BD (GB)**

(74) Representative: **Vossius & Partner**
**Siebertstrasse 4**
**81675 München (DE)**

(56) References cited:
**EP-A- 0 625 863       EP-A- 0 812 119**
**US-A- 5 574 996**

**Description**

The present invention relates to a mobile radio station such as a GSM (Global System for Mobile communication) mobile phone, and particularly to a radio base station monitoring control by the mobile radio station.

In the GSM system, each radio base station reserves four TDMA frames every n multiframes as a paging channel. The value of n can be set for a particular radio base station to any value from 2 to 9. A single block of paging channel frames is long enough for the mobile radio station to listen to its current radio base station for any incoming call and to receive from two neighboring radio base stations in each frame and measure the signal strengths thereof. Thus the signal strength received from eight neighboring radio base stations can be monitored in every n multi-frame.

If two monitor operations are performed in every paging channel TDMA frame a considerable amount of power will be wasted, if the mobile radio station is, for example, at the center of a cell where it is unlikely that any hand-off to a neighboring radio base station will be required imminently.

On the other hand, although it is simple to arrange that fewer monitor operations are performed, this will have the effect of degrading cell reselection performance.

In EP-A-0 812 119, a method for operating a mobile station in a standby mode is disclosed, comprising the steps of making measurements of a currently assigned channel and at least one other currently non-assigned channel, detecting that the mobile station has become stationary, and terminating the measurements of the at least one other currently non-assigned channel.

The method includes the step of monitoring the rate of change of at least a received signal strength indicator (RSSI) for the mobile station's assigned digital control channel, while continuing to make neighbor channel measurements. If the rate of change of the RSSI is below and remains below some predetermined threshold, the mobile station declares itself to be stationary.

It is an object of the present invention to provide a mobile radio station for use in a mobile radio network in which the rate at which neighboring radio base stations are monitored can be reduced for power saving purposes without significantly degrading cell reselection performance.

The reception field strengths of a current cell and of signals transmitted from radio base stations neighboring the current cell are periodically measured. If the reception field strength of a current cell is less than a first threshold that has been previously determined, a rate of decrease of reception field strength of the current cell is determined. If the rate of decrease exceeds a second threshold that represents the maximum acceptable effective decrease in signal between periodic measurements, reception field strengths of signals transmitted from a maximum number of previously determined radio base stations from among neighboring radio base stations are measured. If the reception field strength of a current cell is over the first threshold or if the rate of decrease is under the second threshold, the reception field strengths of signals transmitted from a number of radio base stations less than the maximum number from among neighboring radio base station are measured.

The above and other objects, features, and advantages of the present invention will become apparent from the following description based on the accompanying drawings which illustrate examples of preferred embodiments of the present invention, in which:

Fig. 1 is a diagram showing a cellular radio-telecommunication network including a mobile radio station of the prevent invention.
Fig. 2 is a block diagram showing an embodiment of a mobile radio station 30 shown in Fig.1.
Fig. 3 is a time chart showing how the PCH TDMA frames are separated.
Fig. 4 is a flow chart illustrating operation for determining the frequency of a reception field strength of mobile radio station 30 shown Fig.2.
Fig. 5a is a time chart showing how multiple measurements are performed within a single PCH TDMA frame.
Fig. 5b is a time chart showing a PCH TDMA frame when only a single measurement in performed.
Fig. 6 is a time chart showing how measurements are distributed among available PCH TDMA frames when the mode of reception field strength measuring unit 41 is set to a reduced monitoring mode.

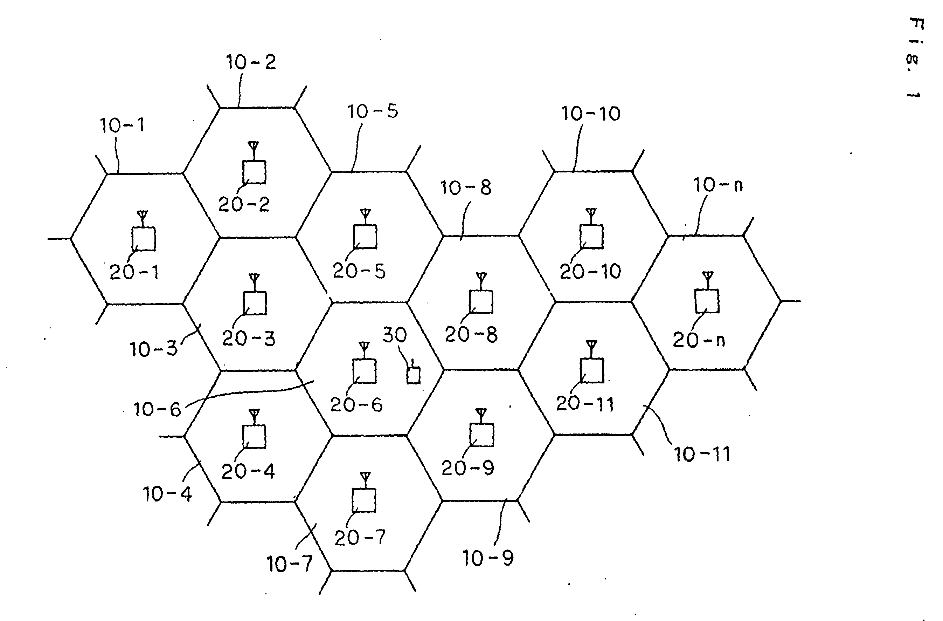

As shown in Fig.1, this network includes radio base stations 20-1~20-n which have cells 10-1~10-n as service areas and mobile radio station 30 existing in cell 10-6.

Here, only one mobile radio station is shown in Fig.1, but a plurality of mobile radio stations exist in the service area.

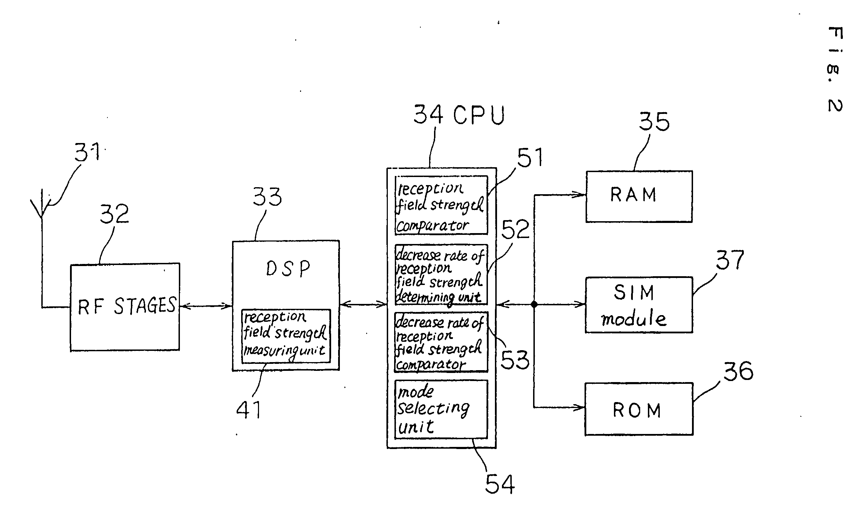

Mobile radio station 30 includes, as shown in Fig.2, antenna 31 and RF stage 32 which receive data and control signals from radio base stations 20-1~20-n in the network and transmit a signal to the radio base station, digital signal processing (DSP) unit 33 which converts a received signal into a digital signal and stores the digital signal temporarily, CPU 34 which has RAM 35 and ROM 36 and processes the digital signal and receives user instructions from a keypad (not shown), and SIM (Single Instruction Multiple data stream) module 37 which is connected with CPU 34 and communicates with CPU 34 in a known manner. Further, digital signal processing unit 33 is responsible for many of the basic logic operations of mobile radio station 30.

Digital signal processing unit 33 has reception field strength measuring unit 41 which measures a reception field strength of a signal transmitted from the current radio base station and a reception field strength of a signal transmitted from a radio base station neighboring to the current radio base station. Reception field strength measuring unit 41 has two measuring modes of which one measuring mode is set up. One mode is a full monitoring mode which measures the reception field strengths of signals transmitted from a maximum number of previously determined radio base stations from among neighboring radio base stations. The other mode is a reduced monitoring mode which measures the reception field strength of a signal transmitted from a number of radio base stations less than the maximum number from among neighboring radio base stations.

CPU 34 has reception field strength comparator 51, which is means for second comparison and compares the reception field strength of a signal of a current cell measured by reception field strength measuring unit 41 with a first threshold previously determined, decrease rate of reception field strength determining unit 52, which determines the rate of decrease of reception field strength of a current cell from a value measured by reception field strength measuring unit 41, decrease rate of reception field strength comparator 53, which is a means for first comparison and compares the rate of decrease determined by decrease rate of reception field strength determining unit 52 with a second threshold previously determined, and mode selecting unit 54, which selects the mode of reception field strength measuring unit 41 based on the result of decrease rate comparison by reception field strength comparator 53. The CPU 34 maintains a list, known as the BA (BCCH Allocation) list, of neighboring radio base stations Ids, and the frequencies on which their control channels are operating. The BA list is maintained on the basis of data transmitted by the current radio base station.

The CPU 34 also maintains a stores value of the last measured signal strength for each of the radio base stations 20-1~20-n in the BA list.

The current radio base station also provides data identifying the period separating paging channel (PCH) TDMA frames as a number from 2 to 9 representing the period in terms of the number of GSM multiframes which occur in the period. If the number (bs_pa_mfrms) is equal to 2, there will be a PCH frame in alternate multi-frames. If the number is equal to 9, there will be eight multi-frames between the multiframes which include a PCH frame.

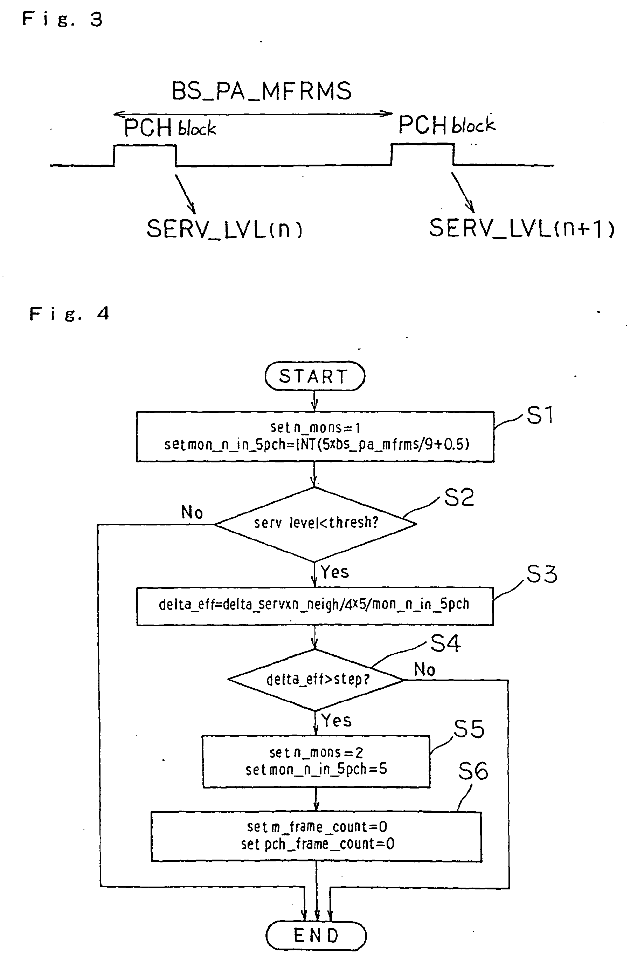

Fig. 3 is a time chart showing how the PCH TDMA frames are separated.

Radio base stations 20-1~20-n also provide data identifying the position of the PCH frame in a multi-frame, but this is not pertinent to the present invention and will not be referred to hereinafter.

Conventionally, when mobile radio station 30 is in the idle mode (i.e. no call is connected) digital signal processing unit 33 measures reception field strengths of signals transmitted from the neighboring radio base stations at the rate of two such measurements in every PCH frame.

In this way, the data about the reception field strength of signals transmitted from the neighboring radio base stations is kept as up-to-date as possible, so that, when a hand-off is required, mobile radio station 30 already has all the data it needs to select a new radio base station from the BA list and commence the hand off.

In the arrangement now described, the frequency of measuring the reception field strengths of a signal transmitted from the neighboring radio base stations is reduced in normal operation so that power used by such measuring is conserved except when a hand-off is judged to be imminently required.

Fig. 4 is a flow chart illustrating operation for determining the frequency of a reception field strength of mobile radio station 30 shown Fig.2.

At the start of this routine, a variable **n_mons** is set to a value of 1 and a variable **mon_n_in_5pch** is set to a value determined in accordance with the value of the parameter **bs_pa_mfrms** previously referred to at step S1.

As shown in Fig.4 the value of **mon_n_in_5pch** in set to the integer part of five ninths of **bs_pa_mfrms** plus 0.5. Thus **mon_n_in_5pch** will be 1 if **bs_pa_mfrms** has its minimum value (2), or 5 if **bs_pa_mfrms** has its maximum value (9) and will vary accordingly between these limits.

Reception field strength comparator 51 compares a reception field strength **serv**_level of signal transmitted from radio base station of current cell measured by reception field strength measuring unit 41 with a first threshold **thresh** (for example -90dbm) previously determined at step S2.

If a reception field strength serv_level is less than the threshold, a value delta_eff representing the effective decrease of a reception field strength of the current cell since measuring the reception fie.ld strength is calculated at step S3.

$$\text{Delta\_eff} = \text{delta\_serve} \times \text{n\_neigh}/4 \times 5/\text{mon\_n\_in}$$

$$\text{5pch}$$

where **delta_serve** is the actual decrease in the signal strength since the previous measuring, and **n_neigh** is the number of radio base stations listed in the BA list.

Decrease rate of reception field strength comparator 53 compares the calculated value of delta_eff with a value step (e.g. 12 dB) which represents the maximum acceptable effective decrease in signal between monitors at step S4.

If the value of **delta_eff** is exceeded the value of **n_mons** is set to 2 (its maximum value) and the value of m**on_n_in_5pch** is set to 5 (its maximum value) at step S5.

If a reception field strength **serv**_level is not less than the first threshold at step S2, or if the value of **delta_eff** does not exceed the value step, the routine terminates.

After that, the value of a multi-frame count and a PCH frame count used by the DSP to determine whether monitoring should be carried out in a particular PCH frame are reset at step S6.

Mode selecting unit 54 of CPU 34 uses the variables **n_mons** and **mon_n_in_5pch** to select the mode of reception field strength measuring unit 41.

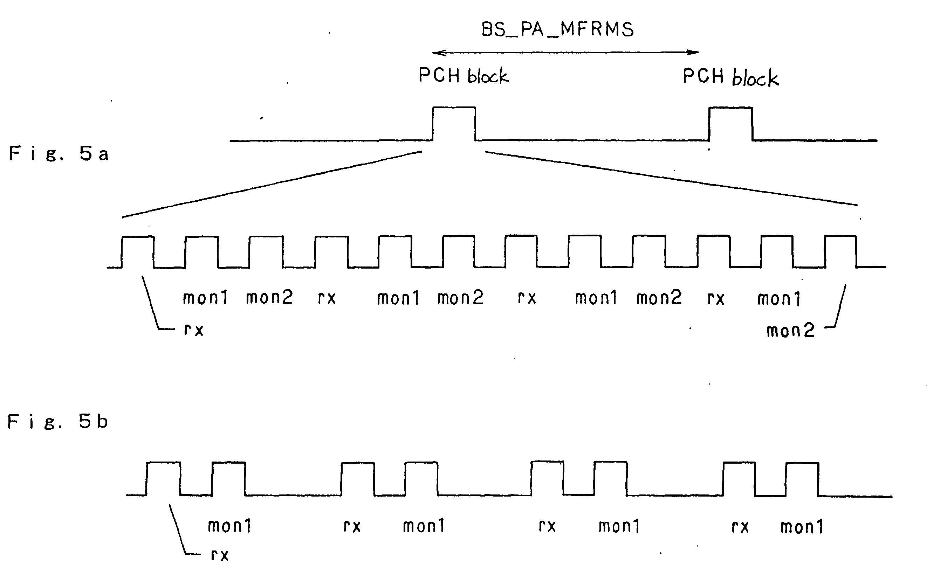

Fig. 5a is a time chart showing how multiple measurements are performed within a single PCH TDMA frame. And Fig. 5b is a time chart showing a PCH TDMA frame when only a single measurement in performed.

If **n_mon** is set to 2, mode selecting unit 54 sets the mode of reception field strength measuring unit 41 for measuring two time within a single PCH frame as shown in Fig.5a. And if **n_mon** is set to 1, mode selecting unit 54 sets the mode of reception field strength measuring unit 41 for measuring one time within a single PCH frame as shown Fig.5b.

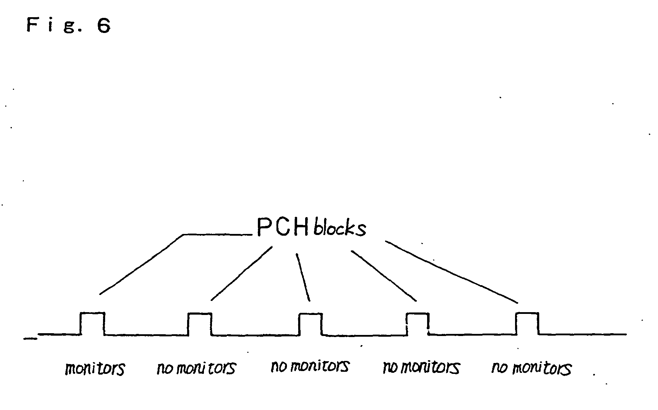

Fig. 6 is a time chart showing how measurements are distributed among available PCH TDMA frames when the mode of reception field strength measuring unit 41 is set to a reduced monitoring mode.

As shown Fig.6, if the value of **mon_n_in_5pch** is set to 1, only the first possible PCH slot in each block of five PCH slots is used for measuring a reception field strength. No measurements are performed in the other 4 PCH blocks.

If the value of **mon_n_in_5pch** is set to 2, the first two frames will be used for measuring a reception field strength and so on up to 5.

The CPU 34 maintains separate counts of multi-frames which it resets periodically to enable it to keep measuring of reception field strengths synchronised. These are the counts which are reset by the CPU 34 when the full monitoring mode is commenced.

In the above embodiment, the value **mon_n_in_5pch** is set to a value determined in accordance with the value of the parameter **bs_pa_mfrms**, but **mon_n_in_5pch** can be derived from a look-up table.

While a preferred embodiment of the present invention has been described using specific terms, such description is for illustrative purposes only, and it is to be understood that changes and variations may be made without departing from the scope of the following claims.

## Claims

1. A mobile radio station comprising:

   measuring means (41) for measuring, provided with a full monitoring mode measuring reception field strengths of a signal transmitted from a maximum number of previously determined radio base stations from among neighboring radio base stations and a reduced monitoring mode measuring a reception field strength of a signal transmitted from a number of radio base station less than said maximum number from among neighboring radio base stations, periodically a reception field strength of a current cell and of signals transmitted from radio base stations neighboring the current cell by one of said two modes;
   determining means (52) for determining the rate of decrease of the reception field strength of the current cell measured by said measuring means (41);
   first comparing means (53) for comparing the rate of decrease determined by said determining means (52) with a threshold that represents: the maximum acceptable effective decrease in signal between monitorings;
   second comparing means for comparing the reception field strength of the current cell measured by said measuring means (41) with a second threshold previously determined, wherein
   said determining means (52) is adapted to determine the rate of decrease of reception field strength of the current cell only if the reception field strength of the current cell measured by said measuring means (41) is less than said second threshold; and
   selecting means (54) for selecting said full monitoring mode of said measuring means (41) when the rate of decrease of reception field strength of the current cell measured by said measuring means (41) exceeds said threshold, and selecting said reduced monitoring mode when the rate of decrease of reception field strength of the current cell measured by said measuring means (41) does not exceed said threshold.

2. A mobile radio station according to claim 1, wherein said measuring means (41) is adapted to receive an indication of the frequency of time-slots available for measuring said reception field strength from said radio base stations.

3. A mobile radio station according to claim 2, wherein said measuring means (41) is able to measure reception field strengths of signals transmitted from more than one neighboring radio station in one single time-slot.

4. A mobile radio station according to claim 3, wherein said measuring means (41) is adapted to measure a maximum number of the reception field strengths in each available TDMA frame in said full monitoring mode.

5. A mobile radio station according to claim 4, wherein said measuring means (41) is adapted to measure reception field strengths in a TDMA frame in said reduced monitoring mode.

6. A mobile radio station according to claim 5, wherein said measuring means (41) is adapted to measure reception field strengths in the selected available time-slot in said reduced monitoring mode.

7. A mobile radio station according to claim 6, wherein the selection of the number of time-slots for measuring reception field strengths is determined by said indication of the frequency of time-slots available.

8. A method for use in a mobile radio station according to any of claims 1 to 7, the method comprising the steps of:

determining the rate of decrease of the reception field strength of a current cell;
comparing the rate of decrease with a threshold that represents the maximum acceptable effective decrease in signal between monitorings;
comparing the reception field strength of the current cell with a second threshold, previously determined, wherein the rate of decrease of reception field strength of the current cell is determined only if the reception field strength of the current cell is less than said second threshold; and
selecting a full monitoring mode when the rate of decrease of reception field strength of the current cell exceeds said threshold, and selecting a reduced monitoring mode when the rate of decrease of reception field strength of the current cell does not exceed said threshold,

wherein said full monitoring mode measures reception field strengths of a signal transmitted from a maximum number of previously determined radio base stations from among neighboring radio base stations and said reduced monitoring mode measures a reception field strength of a signal transmitted from a number of radio base station less than said maximum number from among neighboring radio base stations, the reception field strength of the current cell and of signals transmitted from radio base stations neighboring the current cell being periodically measured by one of said two modes.

**Patentansprüche**

1. Mobile Funkstation, die aufweist:

eine Meßeinrichtung (41) zum Messen, die ausgestattet ist mit: einer vollständigen Überwachungsbetriebsart, die Empfangsfeldstärken eines Signals mißt, das von einer maximalen Anzahl vorher aus benachbarten Funkbasisstationen bestimmter Funkbasisstationen gesendet wird, und eine herabgesetzte Überwachungsbetriebsart, die eine Empfangsfeldstärke eines Signals mißt, das von einer Anzahl von Funkbasisstationen gesendet wird, die geringer als die genannte maximale Anzahl unter den benachbarten Funkbasisstationen ist, um regelmäßig eine Empfangsfeldstärke einer aktuellen Zelle und von Signalen, die von zu der aktuellen Zelle benachbarten Funkbasisstationen gesendet werden, in einer der zwei Betriebsarten zu messen;
eine Bestimmungseinrichtung (52) zum Bestimmen der Abnahmegeschwindigkeit der von der Meßeinrichtung (41) gemessenen Empfangsfeldstärke der aktuellen Zelle;
eine erste Vergleichseinrichtung (53) zum Vergleichen der von der Bestimmungseinrichtung (52) bestimmten Abnahmegeschwindigkeit mit einem Schwellwert, der die maximale annehmbare tatsächliche Abnahme des Signals zwischen Überwachungen darstellt;
eine zweite Vergleichseinrichtung zum Vergleichen der von der Meßeinrichtung (41) gemessenen Empfangsfeldstärke der aktuellen Zelle mit einem vorher bestimmten zweiten Schwellwert, wobei:

die Bestimmungseinrichtung (52) nur dann geeignet ist, die Abnahmegeschwindigkeit der Empfangsfeldstärke der aktuellen Zelle zu bestimmen, wenn die von der Meßeinrichtung (41) gemessene Empfangsfeldstärke der aktuellen Zelle geringer als der zweite Schwellwert ist; und

eine Auswahleinrichtung (54) zum Auswählen der vollständigen Überwachungsbetriebsart der Meßeinrichtung (41), wenn die von der Meßeinrichtung (41) gemessene Abnahmegeschwindigkeit der Empfangsfeldstärke der aktuellen Zelle den Schwellwert überschreitet, und Auswählen der herabgesetzten Überwachungsbetriebsart, wenn die von der Meßeinrichtung (41) gemessene Abnahmegeschwindigkeit der Empfangsfeldstärke der aktuellen Zelle den Schwellwert nicht überschreitet.

2.  Mobile Funkstation nach Anspruch 1, wobei die Meßeinrichtung (41) geeignet ist, von den Funkbasisstationen eine Anzeige für die Frequenz von Zeitschlitzen, die für das Messen der Empfangsfeldstärke verfügbar sind, zu empfangen.

3.  Mobile Funkstation nach Anspruch 2, wobei die Meßeinrichtung (41) fähig ist, Empfangsfeldstärken von Signalen zu messen, die von mehr als einer benachbarten Funkstation in einem einzigen Zeitschlitz gesendet werden.

4.  Mobile Funkstation nach Anspruch 3, wobei die Meßeinrichtung (41) geeignet ist, in der vollständigen Überwachungsbetriebsart eine maximale Anzahl der Empfangsfeldstärken in jedem verfügbaren TDMA-Rahmen zu messen.

5.  Mobile Funkstation nach Anspruch 4, wobei die Meßeinrichtung (41) geeignet ist, in dem herabgesetzten Überwachungsbetrieb Empfangsfeldstärken in einem TDMA-Rahmen zu messen.

6.  Mobile Funkstation nach Anspruch 5, wobei die Meßeinrichtung (41) geeignet ist, in dem herabgesetzten Überwachungsbetrieb Empfangsfeldstärken in dem ausgewählten verfügbaren Zeitschlitz zu messen.

7.  Mobile Funkstation nach Anspruch 6, wobei die Auswahl der Anzahl von Zeitschlitzen zum Messen der Empfangsfeldstärken durch die Anzeige der Frequenz von verfügbaren Zeitschlitzen bestimmt wird.

8.  Verfahren für die Verwendung in einer mobilen Funkstation nach einem der Ansprüche 1 bis 7, wobei das Verfahren die folgenden Schritte aufweist:

Bestimmen der Abnahmegeschwindigkeit der Empfangsfeldstärke einer aktuellen Zelle;
Vergleichen der Abnahmegeschwindigkeit mit einem Schwellwert, der die maximal annehmbare tatsächliche Signalabnahme zwischen Überwachungen darstellt;
Vergleichen der Empfangsfeldstärke der aktuellen Zelle mit einem vorher bestimmten zweiten Schwellwert, wobei die Abnahmegeschwindigkeit der Empfangsfeldstärke der aktuellen Zelle nur bestimmt wird, wenn die Empfangsfeldstärke der aktuellen Zelle geringer als der zweite Schwellwert ist; und
Auswählen einer vollständigen Überwachungsbetriebsart, wenn die Abnahmegeschwindigkeit der Empfangsfeldstärke der aktuellen Zelle den Schwellwert überschreitet, und Auswählen einer herabgesetzten Überwachungsbetriebsart, wenn die Abnahmegeschwindigkeit der Empfangsfeldstärke der aktuellen Zelle den Schwellwert nicht überschreitet,

wobei die vollständige Überwachungsbetriebsart die Empfangsfeldstärken eines Signals mißt, das von einer maximalen Anzahl vorher aus benachbarten Funkbasisstationen bestimmter Funkbasisstationen gesendet wird, und die herabgesetzte Überwachungsbetriebsart eine Empfangsfeldstärke eines Signals mißt, das von einer Anzahl von Funkbasisstationen gesendet wird, die geringer als die genannte maximale Anzahl unter den benachbarten Funkbasisstationen ist, wobei die Empfangsfeldstärke der aktuellen Zelle und von Signalen, die von zu der aktuellen Zelle benachbarten Funkbasisstationen gesendet werden, in einer der zwei Betriebsarten regelmäßig gemessen werden.

**Revendications**

1.  Station radio mobile comprenant :

des moyens de mesure (41) destinés à la mesure, comprenant un mode de surveillance totale mesurant des grandeurs de champ de réception d'un signal transmis à partir d'un nombre maximum de stations de base radio déterminées au préalable parmi des stations de base radio voisines, et un mode de surveillance réduite mesurant une grandeur de champ de réception d'un signal transmis à partir d'un nombre de stations de base radio moins élevé que ledit nombre maximum parmi des stations de base radio voisines, une grandeur de champ de réception d'une cellule actuelle et de signaux transmis à partir de stations de base radio voisines de la cellule actuelle étant mesurée de façon périodique par l'un desdits deux modes ;

des moyens de détermination (52) servant à déterminer le taux de diminution de la grandeur de champ de réception de la cellule actuelle mesuré par lesdits moyens de mesure (41) ;

des premiers moyens de comparaison (53) servant à comparer le taux de diminution déterminé par lesdits moyens de détermination (52) par rapport à un seuil qui représente la diminution efficace maximum acceptable du signal entre des dispositifs de surveillances ;

des deuxièmes moyens de comparaison servant à comparer la grandeur de champ de réception de la cellule actuelle mesurée par lesdits moyens de mesure (41) par rapport à un deuxième seuil défini au préalable, dans laquelle :

lesdits moyens de détermination (52) sont adaptés pour déterminer le taux de diminution de la grandeur de champ de réception de la cellule actuelle uniquement si la grandeur de champ de réception de la cellule actuelle mesurée par lesdits moyens de mesure (41) est inférieure à ladite deuxième valeur de seuil; et

des moyens de sélection (54) servant à sélectionner ledit mode de surveillance totale desdits moyens de mesure (41) quand le taux de diminution de la grandeur de champ de réception de la cellule actuelle mesuré par lesdits moyens de mesure (41) dépasse ledit seuil, et à sélectionner ledit mode de surveillance réduite quand le taux de diminution de la grandeur de champ de réception de la cellule actuelle mesuré par lesdits moyens de mesure (41) ne dépasse pas ledit seuil.

2. Station radio mobile selon la revendication 1, dans laquelle lesdits moyens de mesure (41) sont adaptés pour recevoir une indication de la fréquence de tranches de temps disponibles pour mesurer ladite grandeur de champ de réception à partir desdites stations de base radio.

3. Station radio mobile selon la revendication 2, dans laquelle lesdits moyens de mesure (41) sont aptes à mesurer des grandeurs de champ de réception de signaux transmis à partir de plus d'une station radio voisine à l'intérieur d'une seule tranche de temps.

4. Station radio mobile selon la revendication 3, dans laquelle lesdits moyens de mesure (41) sont adaptés pour mesurer un nombre maximum de grandeurs de champ de réception dans chacune des trames AMRT disponibles dans ledit mode de surveillance totale.

5. Station radio mobile selon la revendication 4, dans laquelle lesdits moyens de mesure (41) sont adaptés pour mesurer des grandeurs de champ de réception dans une trame AMRT dans ledit mode de surveillance réduite.

6. Station radio mobile selon la revendication 5, dans laquelle lesdits moyens de mesure (41) sont adaptés pour mesurer des grandeurs de champ de réception dans la tranche de temps disponible sélectionnée dans ledit mode de surveillance réduite.

7. Station radio mobile selon la revendication 6, dans laquelle la sélection du nombre de tranches de temps servant à mesurer des grandeurs de champ de réception, est déterminée par ladite indication de la fréquence de tranches de temps disponibles.

8. Procédé pour usage dans une station radio mobile selon l'une quelconque des revendications 1 à 7, le procédé comprenant les étapes consistant à :

déterminer le taux de diminution de la grandeur de champ de réception d'une cellule actuelle ;

comparer le taux de diminution à un seuil qui représente la diminution efficace maximum acceptable du signal entre des dispositifs de surveillances ;

comparer la grandeur de champ de réception de la cellule actuelle à un deuxième seuil déterminé au préalable, dans lequel le taux de diminution de la grandeur de champ de réception de la cellule actuelle est déterminé uniquement si la grandeur de champ de réception de la cellule actuelle est inférieure à ladite deuxième valeur de seuil ; et

sélectionner un mode de surveillance totale quand le taux de diminution de la grandeur de champ de réception de la cellule actuelle dépasse ledit seuil, et sélectionner un mode de surveillance réduite quand le taux de diminution de la grandeur de champ de réception de la cellule actuelle ne dépasse pas ledit seuil,

dans lequel ledit mode de surveillance totale mesure des grandeurs de champ de réception d'un signal transmis à partir d'un nombre maximum de stations de base radio déterminées au préalable parmi des stations de base radio voisines, et ledit mode de surveillance réduite mesure une grandeur de champ de réception d'un signal transmis à partir d'un nombre de stations de base radio moins élevé que ledit nombre maximum parmi des stations de base radio voisines, la grandeur de champ de réception de la cellule actuelle et de signaux transmis à partir de stations de base radio voisines de la cellule actuelle étant mesurée de façon périodique par l'un desdits deux modes.

Fig. 1

Fig. 2

Fig. 3

BS_PA_MFRMS

PCH block          PCH block

SERV_LVL(n)          SERV_LVL(n+1)

Fig. 4

START

set n_mons=1
set mon_n_in_5pch=INT(5xbs_pa_mfrms/9+0.5)    S1

serv level<thresh?    S2

No

Yes

delta_eff=delta_servxn_neigh/4x5/mon_n_in_5pch    S3

delta_eff>step?    S4

No

Yes

set n_mons=2
set mon_n_in_5pch=5    S5

S6

set m_frame_count=0
set pch_frame_count=0

END

BS_PA_MFRMS

PCH block                    PCH block

F i g. 5 a

mon1  mon2  rx    mon1  mon2  rx    mon1  mon2  rx    mon1

rx                                                          mon2

F i g. 5 b

mon1      rx    mon1      rx    mon1      rx    mon1

rx

EP 1 026 910 B1

F i g. 6

PCH blocks

monitors   no monitors   no monitors   no monitors   no monitors